# EUROPEAN PATENT APPLICATION

(11) **EP 4 349 801 A1**
(43) Date of publication of application: **10.04.2024**
(21) Application number: 22200016.8
(22) Date of filing: 06.10.2022
(51) Int. Cl.: C04B 35/64, C04B 35/44, F27D 11/04

(54) **ULTRAFAST HIGH-TEMPERATURE SINTERING METHOD**

(71) Applicant: Belenos Clean Power Holding AG, 2502 Bienne (CH)
(72) Inventor: ZHANG, Huanyu, 8032 Zürich (CH); OKUR, Faruk, 4051 Basel (CH); KRAVCHYK, Kostiantyn, 8052 Zürich (CH); PFENNINGER, Reto, 4612 Wangen bei Olten (CH); DUBEY, Romain Jean-Christophe, 8600 Dübendorf (CH); KOVALENKO, Maksym, 8050 Zürich (CH)
(74) Representative: ICB SA

(57) **Abstract**

The present invention relates to a method for producing a sintered inorganic substrate, comprising providing an inorganic substrate between a first and a second carbon-comprising thermally conductive substrate, providing the first and the second thermally conductive substrate and the inorganic substrate between a third and a fourth thermally conductive substrate, heating the third and/or the fourth thermally conductive substrate at a heating rate of at least 50 °C/s to a temperature between 750 °C and 1400 °C, thereby heating the first and/or the second thermally conductive substrate, respectively, and sintering the inorganic substrate by heating the inorganic substrate at a temperature between 750 °C and 1400 °C with the heated first and/or second thermally conductive substrate, wherein the third and the fourth thermally conductive substrates comprise, independently from one another, one or more of a monocrystalline metal oxide and/or a monocrystalline metal nitride.

## Description

### Technical field of the invention

The present invention relates to a method for producing a sintered inorganic substrate. The present invention further relates to an apparatus for sintering an inorganic substrate.

### Background

Inorganic materials, such as ceramics, are widely used in electronics, energy storage and extreme environments due to their high thermal, mechanical and chemical stability. Conventional synthesis of such inorganic materials (in particular ceramics) often involves a solid state reaction to form the inorganic component from a precursor, and sintering the inorganic component to obtain a solid (inorganic) component. Each step typically requires high temperatures and long processing time. This can lead to undesirable, non-uniform grain growth and can become an obstacle for high throughput (mass production).

The long processing time is also one of the issues of the conventional methods in the production of inorganic-based (e.g. ceramic-based) solid state electrolytes (SSEs). Such SSEs are a promising alternative to for example Li-ion batteries, which have shown safety issues and may leak.

Traditional sintering methods typically take place in so-called bulk furnaces, where they are heated to the required sintering temperatures, which depend on the inorganic material composition to be sintered. Disadvantages of such bulk furnaces include long heating and cooling down times (i.e. a low heating rate and a low cooling rate), as well as difficult control of the temperature and the heat distribution (i.e. the uniformity of the temperature).

More recently, new sintering methods have been developed, including micro-wave assisted sintering, spark plasma sintering, and flash sintering. However, microwave-assisted sintering largely depends on the microwave absorption properties of the material to be sintered, which limits the applicability thereof. Spark plasma sintering requires dies to compress the inorganic material during sintering, and thus limits the geometry of the component to be sintered, as well as the scalability. Further, it is not suitable for sintering complex three-dimensional structures due to the applied pressure. Flash-sintering is capable to obtain a heating rate of up to 10000 °C/min, but requires expensive platinum electrodes. Flash-sintering is also difficult to apply to specimens having a complex geometry, such as three-dimensional structures. In particular, the specific flash sintering conditions depend strongly on the electrical characteristics of the inorganic material, which limits the sintering of components with unknown composition.

Another recently developed sintering method is ultrafast high-temperature sintering.

*"*A general method to synthesize and sinter bulk ceramics in seconds", C. Wang, W. Ping, et al., Science 2020, 368 (6490), pp. 521-526, discloses the sintering of ceramic materials between two Joule-heating carbon felts, wherein heating is radiative heating and the sintering is carried out under an inert atmosphere.

WO2020/236767 discloses a fast high-temperature sintering system and method. A substrate to be sintered is placed between two conductive carbon elements with a distance of 0 to 10 mm between each conductive carbon element and the substrate. The conductive carbon elements are heated by electrical current to a temperature between 500 °C and 3000 °C, and sintering is performed within 1 second to 1 hour by heating the substrate with the heated conductive carbon elements.

*"*High-temperature ultrafast sintering: exploiting a new kinetic region to fabricate porous solid-state electrolyte scaffolds", R. Wang, Q. Dong, et al., Advances materials 2021, 33 (34), 2100726 discloses a method to sinter 3D porous scaffolds with a range of ceramic solid state electrolytes on various substrates at high temperature in seconds. For example, a co-sintering is performed with an alumina (Al₂O₃) substrate. However, (co-)sintering on various substrates limits the applicability in full solid state battery cells.

A disadvantage of the foregoing methods and apparatuses is that self-standing substrates, i.e. without a support or carrier being present, are difficult to sinter. Especially in the case of flat self-standing substrates, it is difficult with the foregoing methods and apparatuses to maintain the flatness of the substrate during sintering. In other words, sintered substrates obtained by means of the foregoing methods and/or apparatuses, when sintered without a carrier or support present, tend to be bent, show curves, and even may show cracks, or may start to crack when trying to flatten the sintered substrate post-sintering.

### Summary of the invention

The present invention aims to overcome one or more of the above drawbacks. It is an aim of the invention to provide a method for sintering an inorganic substrate, wherein the method requires reduced sintering times. It is a further aim to provide a method for sintering which maintains the microstructure and/or the stoichiometry of the inorganic substrate, and/or wherein the sintering is carried out uniformly. It is a further aim to provide a sintering method allowing to sinter thin, i.e. having a thickness below 100 µm, and/or flat inorganic substrates, without imparting damage or deformation to the sintered inorganic substrates, i.e. thereby maintaining the flatness. It is a further aim of the invention to provide an apparatus capable to sinter an inorganic substrate in a homogeneous way.

According to a first aspect of the invention, there is disclosed a method for producing a sintered inorganic substrate according to the appended claims.

The inorganic substrate can comprise or substantially consist of any known inorganic material. Advantageously, the inorganic substrate comprises or substantially consists of a ceramic material. Advantageously, the ceramic material can comprise one or more of an alkali metal and/or an alkaline earth metal. In other words, the inorganic substrate advantageously comprises or substantially consists of a ceramic material comprising one or more of an alkali metal or an alkaline earth metal.

Advantageously, the alkali metal comprises one or more of lithium, sodium or potassium. Advantageously, the alkaline earth metal comprises one or more of magnesium or calcium. Advantageously, when the ceramic material comprising one or more of an alkali metal and/or an alkaline earth metal comprises lithium, the lithium is present as a lithium garnet-type structure. In other words, the ceramic material comprising one or more of an alkali metal and/or an alkaline earth metal advantageously comprises a lithium garnet-type structure. Advantageously, the lithium garnet-type structure is lithium lanthanum zirconium oxide (LLZO).

According to methods of the present disclosure an inorganic substrate to be sintered is provided. The inorganic substrate is provided between a first thermally conductive substrate and a second thermally conductive substrate. Advantageously, at least one, and preferably both, of the first and the second thermally conductive substrates comprise carbon.

Advantageously, the distance between the inorganic substrate and the first and second thermally conductive substrate is between 0 mm (i.e. making contact) and 20 mm, preferably between 0 mm and 10 mm. Advantageously, the first and/or the second thermally conductive substrate contacts at least partially, for example and preferably entirely (i.e. over the entire surface area), the respective surface of the inorganic substrate.

The method further comprises providing the first and the second thermally conductive substrate and the inorganic substrate (to be sintered) between a third thermally conductive substrate and a fourth thermally conductive substrate.

The third thermally conductive substrate and the fourth thermally conductive substrate individually comprises or substantially consists of one or more metal nitride and/or metal oxide. Advantageously, the third and the fourth thermally conductive substrates comprise, independently from one another, one or more monocrystalline metal nitride and/or monocrystalline metal oxide. With "individually comprising or substantially consisting of" is meant in the present disclosure that the two substrate can be the same, i.e. have the same composition, or can be different, i.e. having a different composition.

Advantageously, the metal nitride comprises boron nitride and/or aluminium nitride. Advantageously, the metal oxide comprises alumina and/or sapphire.

The method further comprises heating the third and/or the fourth thermally conductive substrate to a temperature between 500 °C and 2000 °C, such as between 600 °C and 1500 °C, preferably between 750 °C and 1400 °C, more preferably between 900 °C and 1250 °C. Advantageously, the third and the fourth thermally conductive substrate can be heated independently from one another. Advantageously, one or both of the third and the fourth thermally conductive substrate can be heated. Advantageously, when the third and the fourth thermally conductive substrate are heated, they can be heated to the same or to a different temperature.

Advantageously, the third and/or the fourth thermally conductive substrate are heated at a heating rate of at least 40 °C/s, preferably at least 50 °C/s, for example at least 55 °C/s, at least 60 °C/s, or at least 65 °C/s. Such heating rates are considered in the field as ultrafast heating rates, i.e. the heating is an ultrafast heating. Upon heating the third and/or the fourth thermally conductive substrate, the first and/or the second thermally conductive substrate is heated as well.

The method further comprises sintering the inorganic substrate. The sintering is performed by heating the inorganic substrate with the heated first and/or second thermally conductive substrates. Advantageously, the inorganic substrate is heated at a temperature between 500 °C and 2000 °C, such as between 600 °C and 1500 °C, preferably between 750 °C and 1400 °C, more preferably between 900 °C and 1250 °C.

Advantageously, the heating is carried out in the presence of an inert gas. Advantageously, the sintering is carried out in the presence of an inert gas. Advantageously, the inert gas comprises or substantially consists of one or more of argon, helium and nitrogen, or a combination of two or more thereof.

Advantageously, the third and the fourth thermally conductive substrate, the first and the second thermally conductive substrate and the inorganic substrate are provided between a first conductor and a second conductor. Advantageously, at least one, and preferably both, of the first and the second conductor comprises carbon.

According to a first embodiment, heating the third and/or the fourth thermally conductive substrate advantageously comprises inducing an electrical current to the first and/or the second conductor. Advantageously, upon inducing an electrical current to the first and/or the second conductor, the third and/or the fourth thermally conductive substrate, respectively, are heated, advantageously by means of Joule heating. Joule heating is also known as resistive heating or Ohmic heating. Advantageously, upon inducing an electrical current (in use of the apparatus) to the first and/or the second conductor, any Ohmic losses or resistive losses in the first and/or the second conductor dissipates in the form of heat, which heats the third and/or the fourth thermally conductive substrate.

Advantageously, the electrical current is induced to the first and/or the second conductor by providing a third conductor at a proximal end of the first conductor and/or at a proximal end of the second conductor. Further, a fourth conductor is advantageously provided at a distal end of the first conductor and/or at a distal end of the second conductor. Advantageously, the electrical current is induced to the third and the fourth conductor, thereby inducing the current to the first and/or the second conductor.

Advantageously, the third and the fourth conductor comprise individually, i.e. independently from one another, copper, tungsten, or a combination thereof.

According to a second embodiment, the third and/or the fourth thermally conductive substrate are advantageously heated by means of radiation, preferably infrared (IR) radiation.

Advantageously, when the third and the fourth thermally conductive substrate, and the first and the second thermally conductive substrate and the inorganic substrate are provided between a first conductor and a second conductor, the third and/or the fourth thermally conductive substrate can be heated by means of IR radiation by means of heating the first and/or the second conductor by means of IR radiation, respectively.

Advantageously, the step of providing the inorganic substrate to be sintered comprises manufacturing a green structure and debinding the green structure.

Advantageously, manufacturing, i.e. preparing, producing or obtaining, the green structure comprises preparing a mixture by adding a compound comprising one or more of an alkali metal and/or an alkaline earth metal and a binder to a solvent. Advantageously, the alkali metal and the alkaline earth metal are as described hereinabove.

The mixture is then film-casted, thereby obtaining a green structure. Film-casting in the present disclosure includes casting methods known in the art, for example tape-casting, screen printing and spray printing. Advantageously, film-casting of the mixture comprises tape-casting of mixture, respectively. Advantageously, the tape-casting is performed by methods known in the art.

Debinding of the green structure comprises at least partially removing one or more, and preferably all, of the binder and the solvent. Advantageously, at least 50 %, preferably at least 75 %, more preferably at least 80 %, for example at least 85 %, at least 90 %, at least 95 %, at least 98 %, or at least 99 % of one or more, and preferably all, of the binder and the solvent are removed.

Advantageously, debinding is performed, or takes place, in an atmosphere comprising at least 20 vol.% oxygen, for example in air or substantially pure oxygen (for example oxygen of industrial grade). Advantageously, the debinding is performed at a temperature between 250 °C and 800 °C, preferably between 400 °C and 700 °C.

Advantageously, sintering of the inorganic substrate obtained as explained hereinabove by preparing a mixture, film-casting the mixture and debinding the resulting green structure, allows to obtain porous (sintered) inorganic substrates, dense (sintered) inorganic substrates and substrates having a porosity that varies throughout the thickness of the inorganic substrate, i.e. (sintered) inorganic substrates having a porosity gradient.

A "porous substrate" as used herein is a substrate having a porosity of at least 40 %, wherein the porosity is measured by X-ray computed tomography. A "dense substrate" as used herein is a substrate having a porosity of 40 % or less, as measured by X-ray computed tomography. A "substrate having a porosity gradient" as used herein is a substrate having a first area having a first porosity and a second area having a second porosity. The first and second area can for example be a first and a second surface, such as two opposite surfaces.

Advantageously, a sintered inorganic substrate having a porosity of at least 40% as measured by X-ray computed tomography is obtained by providing an inorganic substrate obtained as explained hereinabove by preparing a mixture, film-casting the mixture and debinding the resulting green structure, and heating the inorganic substrate at a temperature between 750 °C and 1400 °C, for a duration between 1 seconds and 200 seconds.

Advantageously, when the temperature is in the lower half of the temperature range, the duration is in the upper half of the duration range. Advantageously, when the temperature is in the upper half of the temperature range, the duration is in the lower half of the duration range. However, as will be understood, the temperature and duration depend on several aspects, including, without being limited thereto, the composition and structure of the debinded green structure, and the predetermined porosity to be obtained after sintering.

Advantageously, when the temperature is between 750 °C and 1050 °C, the duration is between 60 seconds and 200 seconds. Advantageously, when the temperature is between 1050 °C and 1400 °C, the duration is between 1 second and 60 seconds.

Alternatively, and advantageously, a sintered inorganic substrate having a first porosity at a first surface and a second porosity different from the first porosity at a second surface opposite to the first surface, can be obtained by providing an inorganic substrate obtained as explained hereinabove by preparing a mixture, film-casting the mixture and debinding the resulting green structure, and heating the inorganic substrate by heating the third and the fourth thermally conductive substrate to a different temperature and/or for a different duration. Consequently, the first surface and the second surface opposite to the first surface are heated to a different temperature and/or for a different duration. Advantageously, each temperature is between 750 °C and 1400 °C and each duration is between 1 s and 200 s.

The present invention further discloses the use of the sintering methods of the present disclosure for producing an inorganic solid state electrolyte.

Advantages of the methods of the invention include, without being limited thereto:
- significantly reduced sintering times as compared to existing sintering methods, thereby reducing the energy consumption;
- maintaining of the microstructure and/or the stoichiometry of the inorganic substrate;
- uniform, homogeneous sintering;
- thin, i.e. having a thickness below 100 µm, and/or flat inorganic substrates, can be sintered without imparting damage or deformation thereto, and by maintaining the flatness;
- versatility, in particular the possibility to obtain porous or dense (sintered) inorganic substrates, or (sintered) inorganic substrates having a porosity gradient or a dense-porous bilayer structure, from the same inorganic substrate to be sintered, in particular thereby excluding the need for the use of pore-forming components or agents.

### Description of the figures

Aspects of the invention will now be described in more detail with reference to the appended drawings, wherein same reference numerals illustrate same features and wherein:
- Figures 1 to 6 schematically shows various embodiments of sintering methods of the invention;
- Figures 7A and 7B show SEM-images at different magnifications of the cross-section of a substrate sintered according to a method known in the field;
- Figures 8A and 8B show SEM-images at different magnifications of the cross-section of a substrate sintered according to an inventive method;
- Figures 9A and 9B show SEM-images of the cross-section of a porous structure prior to sintering and after sintering, respectively;
- Figures 10A and 10B show SEM-images of the cross-section of a bilayer structure prior to sintering and after sintering, respectively;
- Figures 11A to 11E show SEM-images of the cross-section of a sintered structure, showing varying porosity;
- Figure 12A shows a heating and sintering temperature profile, and Figure 12B shows a SEM-image of the cross-section of a sintered structure obtained according to the temperature profile of Figure 12A;
- Figure 13A shows a heating and sintering temperature profile, and Figure 13B shows a SEM-image of the cross-section of a sintered structure obtained according to the temperature profile of Figure 13A;
- Figure 14 shows the critical current density measurements for a symmetrical cell;
- Figure 15 shows the cycling stability measurement of a solid state battery comprising a solid state electrolyte obtained according to methods of the invention as function of the number of cycles.

### Detailed description of the invention

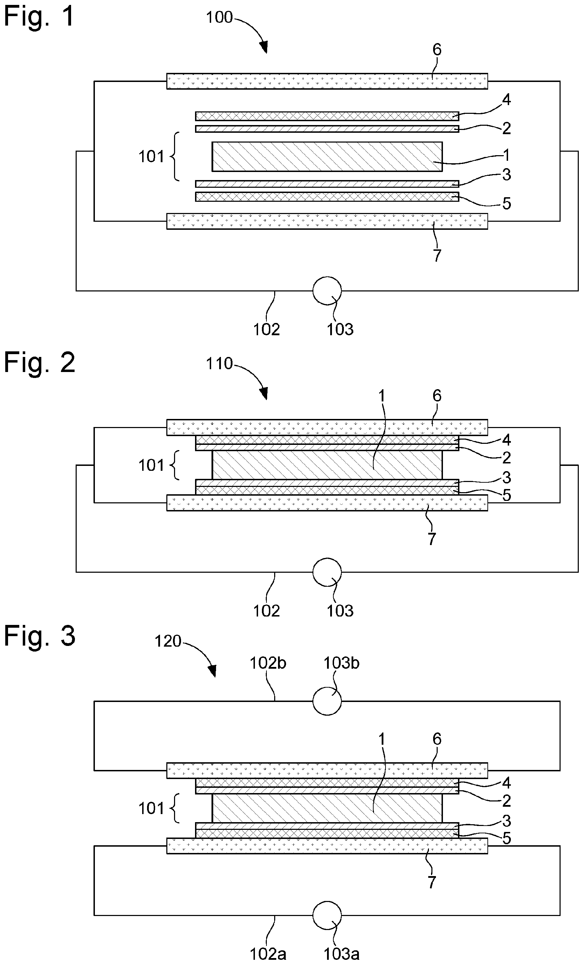

Figure 1 shows a schematical set-up 100 suitable for carrying out methods of the invention. An inorganic substrate to be sintered 1 is provided in the space 101 between a first thermally conductive substrate 2 and a second thermally conductive substrate 3. A third thermally conductive substrate 4 is provided adjacent to the first thermally conductive substrate 2. A first conductor 6 is provided adjacent to the third thermally conductive substrate 4. A fourth thermally conductive substrate 5 is provided adjacent to the second thermally conductive substrate 3. A second conductor 7 is provided adjacent to the fourth thermally conductive substrate 5.

The inorganic substrate 1 is advantageously as described above. The inorganic substrate 1 can be a substrate, which, upon sintering, forms a solid state electrolyte.

The inorganic substrate can have any geometry possible. In particular, and advantageously, the inorganic substrate has a planar shape, such as a plate or a layer. Advantageously, the inorganic substrate is substantially flat. With "substantially flat" is meant in the present disclosure that the thickness of the substrate at each position thereof is between the 80 % and 120 % of the average thickness of the substrate.

Advantageously, at least the space 101 is filled with an inert gas. The inert gas comprises or substantially consists of argon, helium, nitrogen, or a combination of two or more thereof. Advantageously, the inert gas comprises or substantially consists of argon. In other words, the sintering is advantageously performed in an inert atmosphere.

Advantageously, the first 2 and the second 3 thermally conductive substrates, independently from each other, comprise or substantially consist of carbon. For example, they can comprise or substantially consist of graphite, carbon fibres, or carbon nanotubes.

The first 2 and second 3 thermally conductive substrates advantageously have a planar shape, such as a film, a foil, a sheet or a foil, without being limited thereto. Advantageously, the first 2 and second 3 thermally conductive substrates are substantially flat. Examples of carbon-comprising thermally conductive substrates include, without being limited thereto, graphite, carbon fibres, carbon nanotubes, or combinations of two or more thereof.

As shown in Figure 1, the dimensions of the space 101 are advantageously so that the surfaces of the inorganic substrate 1 are not in contact with the first 2 and the second 3 thermally conductive substrate during heating and sintering. Alternatively, and also advantageously, one or both - as shown in Figure 2 - of the first 2 and the second 3 thermally conductive substrate at least partially contacts the inorganic substrate 1 during heating and sintering. Advantageously, the distance between the inorganic substrate 1 and each one of the first 2 and the second 3 thermally conductive substrate is, independently from one another, between 0 mm and 25 mm, preferably between 0 mm and 20 mm, more preferably between 0 mm and 15 mm, or between 0 mm and 10 mm.

The third 4 and the fourth 5 thermally conductive substrate can have the same or a different composition. Advantageously, the third 4 and fourth 5 conductive substrate have, independently from one another, a thermal conductivity of at least 25 W/(m*K), such as at least 35 W/(m*K), at least 50 W/(m*K), for example at least 100 W/(m*K), at least 150 W/(m*K), preferably at least 200 W/(m*K), such as at least 250 W/(m*K). Advantageously, the third 4 and the fourth 5 thermally conductive substrate comprise or substantially consist of metal nitrides or metal oxides. Non-limiting examples of metal nitrides include boron nitride (thermal conductivity of 751 W/(m*K)) or aluminium nitride (thermal conductivity of 321 W/(m*K)). Non-limiting examples of metal oxides include aluminium oxide (thermal conductivity 26 W/(m*K)) or sapphire (thermal conductivity 35 W/(m*K)), such as sapphire single crystals.

Advantageously, the metal nitrides comprise or substantially consist of monocrystalline metal nitrides. Advantageously, the metal oxides comprise or substantially consist of monocrystalline metal oxides. The inventors have discovered that monocrystalline metal nitrides and monocrystalline metal oxides are capable to resist better, i.e. do not show significant damage or deterioration, the high heating rates (i.e. at least 50 °C/s) of the methods of the invention, when compared to the non-monocrystalline metal nitrides and metal oxides. They also seem to resist better the cooling rates of the inventive methods.

The first 2 and third 4 thermally conductive substrate can be at least partially, or entirely (as shown in Figure 2), in contact with each other. Similarly, the second 3 and fourth 5 thermally conductive substrate can be at least partially, or entirely (as shown in Figure 2), in contact with each other.

The inventors have discovered that by using a third 4 and a fourth 5 conductive substrate as described above, and in particularly when comprising boron nitride, it is possible to treat the inorganic substrate 1 without the need for a carrier or a support onto which the inorganic substrate 1 is to be placed. In other words, it is possible to sinter so-called self-standing inorganic substrates, i.e substrates that are readily available without being on a carrier or a support structure.

Further, the inventors have surprisingly discovered that the third 4 and the fourth 5 conductive substrate according to the invention allow to heat and sinter thin inorganic substrates in an uniform way, without imparting any structural damage thereto.

The inventors have also surprisingly discovered that the third 4 and the fourth 5 conductive substrate according to the invention allow to sinter substantially flat inorganic substrates, thereby obtaining substantially flat sintered inorganic substrates. In other words, the sintering methods of the invention allow for maintaining the flatness of the substrate that is sintered.

Further, it was noticed that the provision of a carbon-comprising thermally conductive substrate 2, 3 between the third 4 and the fourth 5 thermally conductive substrate allows to prevent any solid state reaction between the third 4 and the fourth 5 thermally conductive substrate and the inorganic substrate 1 during heating and sintering.

Advantageously, at least one, and preferably both, of the first 6 and the second 7 conductor comprises or substantially consists of carbon. For example, the first 6 and the second 7 conductor can, independently from one another, comprise or substantially consist of graphite, carbon fibres, or carbon nanotubes. The first 6 and the second 7 conductor can have the same composition or a different composition.

The first 6 and the second 7 conductor advantageously have a planar shape, such as a film, a foil, a sheet or a foil, without being limited thereto. Advantageously, the first 6 and the second 7 conductor are filamentous carbon materials. For example, without being limited thereto, these carbon materials can be spongy carbon, also called carbon felt in the field. Further, the filamentous carbon material may comprise any electrically conducting layer that is able to dissipate heat to any object in its surrounding, e.g. adjacent substrates or layers, via resistive losses, also known as Ohmic losses.

Advantageously, as shown in figures 1 and 2, the third 4 and the fourth 5 thermally conductive substrate are heated by inducing (e.g. applying) an electrical current 102 is applied to first 6 and the second 7 conductor. Consequently, the electrical current 102 is made to flow through the first 6 and the second 7 conductor.

The electrical current 102 can be a continuous current or a pulsed current. The current can be a direct current (DC) or an alternating current (AC). Advantageously, a power source is provided to supply and induce the electrical current. Advantageously, the electrical current 102 is provided by means of a power source 103.

Advantageously, upon passing the electrical current through the first 6 and the second 7 conductor, the third 4 and the fourth 5 thermally conductive substrate are heated by means of Joule heating, as explained above. Advantageously, the third 4 and the fourth 5 thermally conductive substrate are heated uniformly. As they are thermally conductive, the heat is transferred to the first 2 and the second 3 thermally conductive substrate, respectively. Since the first 2 and the second 3 thermally conductive substrate are thermally conductive as well, they advantageously transfer the heat to the inorganic substrate, which is heated and sintered.

Advantageously, the heating is performed at a heating rate between 50 °C/s and 120 °C/s, such as between 55 °C/s and 110 °C/s, preferably between 60 °C/s and 100 °C/s, such as between 60 °C/s and 90 °C/s, or between 60 °C/s and 80 °C/s.

Advantageously, at least one, and preferably both, of the heating and the sintering are performed in an inert atmosphere, i.e. in the presence of one or more inert gases, such as argon, helium or nitrogen. This reduces the risk of any unwanted side effects, such as oxidation or calcination reactions, taking place.

Advantageously, the electrical current is brought back to 0 A once the sintering is completed, i.e. once the predetermined sintering duration has been reached. Advantageously, the absence of an electrical current does no longer generate resistive loses and thus heat, so that the temperature of the third 4 and the fourth 5 thermally conductive substrate decreases, i.e. the third 4 and the fourth 5 thermally conductive substrate cool down. Upon cooling down of the third 4 and the fourth 5 thermally conductive substrate, the first 2 and the second 3 thermally conductive substrate, and the sintered inorganic substrate, cool down as well.

Advantageously, the method comprises a step of active cooling of the thermally conductive substrates and the sintered inorganic substrate. Active cooling can be performed by methods known in the art. Advantageously, active cooling comprises passing a current of cold inert gas over one or more of the thermally conductive substrates and/or over the sintered inorganic substrate. The inert gas can be as described hereinabove.

Figure 3 represents a further embodiment 120 of a method of the present invention. Advantageously, a first 2, second 3, third 4 and fourth 5 thermally conductive substrate, and a first 6 and a second 7 conductor are provided as described in the method represented in Figure 2. Further, the space 101 between the first 2 and the second 3 thermally conductive substrates is provided so that the inorganic substrate 1 to be sintered contacts the first 2 and the second 3 thermally conductive substrate.

Advantageously, a first electrical current 103a is induced to the second conductor 7. Advantageously, the first electrical current 103a is generated by a first power source 103a. The first power source 103a is advantageously as described above. Upon inducing the first electrical current 102a to the second conductor 7, the current 102a passes through the second conductor 7, thereby generating resistive losses. Advantageously, the resistive losses heat the fourth thermally conductive substrate 5.

Advantageously, a second electrical current 103b is induced to the first conductor 6. Advantageously, the second electrical current 103b is generated by a second power source 103b. The second power source 103b is advantageously as described above. Upon inducing the second electrical current 102b to the first conductor 6, the current 102b passes through the first conductor 6, thereby generating resistive losses. Advantageously, the resistive losses heat the third thermally conductive substrate 4.

Advantageously, the embodiment of a method of the present invention as represented by Figure 3 allows to heat the third 4 and the fourth 5 thermally conductive substrate independently from one another. Consequently, and advantageously, the first 2 and the second 3 thermally conductive substrate can be heated independently from one another. Advantageously, it is possible by means of this embodiment of a method according to the invention to heat a first surface of the inorganic substrate 1 and a second surface of the inorganic substrate 1 opposite to the first surface at a different heating rate and/or to a different temperature. Advantageously, it is possible by means of this embodiment of a method to sinter a first surface of the inorganic substrate 1 and a second surface of the inorganic substrate 1 opposite to the first surface at a different temperature and/or for a different duration.

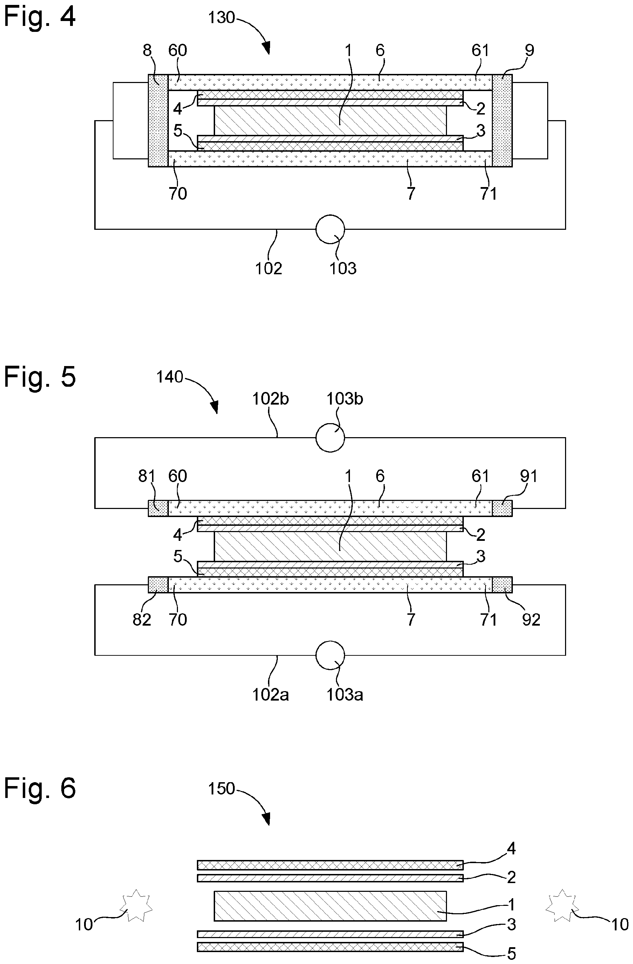

Figure 4 represents yet a further embodiment 130 of a method of the present invention. Advantageously, a first 2, second 3, third 4 and fourth 5 thermally conductive substrate, and a first 6 and a second 7 conductor are provided as described in the method represented in Figure 2. Further, the space 101 between the first 2 and the second 3 thermally conductive substrates is provided so that the inorganic substrate 1 to be sintered contacts the first 2 and the second 3 thermally conductive substrate.

Advantageously, an electrical current 102 is induced to the first conductor 6 and the second conductor 7 via a third conductor 8 and a fourth conductor 9. The electrical current 102 is advantageously provided by means of a power source 103, as described hereinabove.

Advantageously, the third 8 and the fourth 9 conductor have an electrical conductivity between 10⁻³ S/cm and 75 * 10⁴ S/cm. Advantageously, the third 8 and/or the fourth 9 conductor, independently from one another, comprises or substantially consists of copper, a copper alloy, silver, a silver alloy, tungsten, a tungsten alloy, iron, an iron alloy, or a combination of two or more thereof.

Advantageously, the third conductor 8 is provided at a proximal end 60 of the first conductor 6 and at a proximal end 70 of the second conductor. Advantageously, the third conductor 8 contacts at least partially, and preferably entirely, the first conductor 6 at its proximal end 60 and/or contacts at least partially, and preferably entirely, the second conductor 7 at its proximal end 70.

Advantageously, the fourth conductor 9 is provided at a distal end 61 of the first conductor 6 and at a distal end 71 of the second conductor. Advantageously, the fourth conductor 9 contacts at least partially, and preferably entirely, the first conductor 6 at its distal end 61 and/or contacts at least partially, and preferably entirely, the second conductor 7 at its distal end 71.

Advantageously, the resistive losses generated upon inducing or applying the electrical current 102 to the first 6 and the second 7 conductor via the third 8 and the fourth 9 conductor uniformly heat the third 4 and the fourth 5 thermally conductive substrate. The heated third 4 and fourth 5 thermally conductive substrate advantageously heat the first 2 and the second 3 thermally conductive substrate. Advantageously, the inorganic substrate 1 to be sintered is heated and sintered by means of the heated first 2 and the heated second 3 thermally conductive substrate.

Figure 5 represents a further embodiment 140 of a method of the present invention. Advantageously, a first 2, second 3, third 4 and fourth 5 thermally conductive substrate, and a first 6 and a second 7 conductor are provided as described in the method represented in Figure 2. Further, the space 101 between the first 2 and the second 3 thermally conductive substrates is provided so that the inorganic substrate 1 to be sintered contacts the first 2 and the second 3 thermally conductive substrate.

Advantageously, a first electrical current 102a is induced to the second conductor 7 via a second portion 82 of a third conductor and a second portion 92 of a fourth conductor. Advantageously, the electrical current 102a is provided by means of a first power source 103a. The power source 103a is advantageously as described above. Advantageously, the second portion 82 of the third conductor is provided at, and in particular contacts at least partially, a proximal end 70 of the second conductor 7. Advantageously, the second portion 92 of the fourth conductor is provided at, and in particular contacts at least partially, a distal end 71 of the second conductor 7.

Advantageously, a second electrical current 102b is induced to the first conductor 6 via a first portion 81 of a third conductor and a first portion 91 of a fourth conductor. Advantageously, the electrical current 102b is provided by means of a second power source 103b. The power source 103b is advantageously as described above. Advantageously, the first portion 81 of the third conductor is provided at, and in particular contacts at least partially, a proximal end 60 of the first conductor 6. Advantageously, the first portion 91 of the fourth conductor is provided at, and in particular contacts at least partially, a distal end 61 of the first conductor 6.

Advantageously, the third and the fourth conductor have an electrical conductivity between 10⁻³ S/cm and 75 * 10⁴ S/cm. Advantageously, the third and the fourth conductor comprise, independently from one another, copper, a copper alloy, silver, a silver alloy, tungsten, a tungsten alloy, iron, an iron alloy, or a combination of two or more thereof.

Advantageously, and as explained above, the provision of a first 102a and a second 102b electrical current allows to heat and sinter a first surface of the inorganic substrate 1 and a second surface of the inorganic substrate 1 opposite to the first surface independently from one another.

Figure 6 shows yet another embodiment of methods of the present invention. Advantageously, a first 2, a second 3, a third 4 and a fourth 5 thermally conductive substrate are provided as in the representation of a method of Figure 1. An inorganic substrate to be sintered is provided in the space 101 between the first 2 and the second 3 thermally conductive substrate.

Advantageously, at least the first 2 and the second 3 thermally conductive substrate is heated by means of radiation 10. Alternatively, or additionally, at least the third 4 and the fourth 5 thermally conductive substrate is heated by means of radiation 10. Advantageously, the radiation is an infrared radiation. The radiation can be provided by means of one or more radiation sources, in particular light sources, e.g. IR light sources.

Advantageously, the inorganic substrate to be sintered is provided by providing a mixture, film-casting the mixture and advantageously debinding the film-casted mixture.

Advantageously, a mixture is obtained by adding a compound comprising one or more of an alkali metal and/or an alkaline earth metal and a binder to a solvent.

Advantageously, the alkali metal comprises or substantially consists of lithium or sodium. Advantageously, the alkaline earth metal comprises or substantially consists of magnesium.

Advantageously, the solvent comprises a polar solvent. Non-limiting examples of suitable polar solvents include isopropanol, 1-propanol, 2-propanol, butanol, ethanol, methanol, acetone, xylene, methyl ethyl ketone, toluene, 1,1,1-trichloroethane, chlorohexane, cyclohexane, and water.

Non-limiting examples of the binder include polyvinylalcohol, polyvinyl butyral, polyvinyl chloride, polyurethane, cellulose acetate-butyrate, polyacrylate esters, polytetrafluoroethylene, polypropylene carbonates, vinyl chloride acetate, methyl cellulose, and ethyl cellulose.

Optionally, the mixture can comprise one or more further compound, such as, without being limited thereto, a plasticizer, a dispersant (i.e. a surfactant).

Non-limiting examples of a plasticizer include (poly)propylene glycols, (poly)ethylene glycols, butyl benzyl phthalates, butyl stearate, mixtures of ester phthales, polypropylene carbonates, tricresyl phosphate, and trielhylene glycols.

Non-limiting examples of a dispersant include polyvinyl butyral, phosphate esters, ethoylate, aliphatic hydrocarbons, linoleic acid, polyisobutylene, polyethylene glycol, sodium sulfosuccinate, and 2-amino-2-methyl-1-propanol.

Optionally, and advantageously, the mixture can further comprise one or more of a carbonate, an oxide, a tungsten oxide, or a zirconium oxide of the alkali metal and/or the alkaline earth metal comprised in the first and/or second mixture, respectively. A particular example of such a compound is an alkali metal carbonate or an alkaline earth metal carbonate. For example, when the mixture comprises lithium, the mixture can comprise lithium carbonate (Li₂CO₃).

Advantageously, when the mixture comprises one or more of such a compound, the compound is present in an amount between 0.1 % and 10 % by weight, preferably between 0.5 % and 9 % by weight, more preferably between 1 % and 8 % by weight, such as between 2 % and 7 % by weight, for example between 2.5 % and 5 % by weight, based on the total weight of the mixture.

Advantageously, the mixture is obtained by mixing the components, for example by ball milling or other techniques known in the art.

The mixture can be in the form of a slurry, a suspension (i.e. a suspended solution), a solution, or a dispersion.

Advantageously, the mixture is film-casted as explained hereinabove, thereby obtaining a green structure. Advantageously, the green structure is debinded as explained hereinabove.

Advantageously, the methods of the invention allow to produce (sintered) inorganic substrates having a porosity which can be varied based on the application or use of the (sintered) inorganic substrate. In particular, such (sintered) inorganic substrates can be obtained by means of providing the inorganic substrate to be sintered by mixing, film-casting and advantageously debinding as explained above.

The inventors have surprisingly discovered that sintering inorganic substrates (to be sintered) provided by mixing, film-casting and advantageously debinding as explained above according to methods of the invention allow to obtain sintered inorganic substrates which are dense (i.e. having a porosity of 40 % or less), porous (i.e. having a porosity of at least 40 %, as measured by X-ray tomography) or have a porosity gradient (i.e. a porosity which varies throughout the thickness of the (sintered) inorganic substrate) from a single (i.e. having the same composition) inorganic substrate to be sintered.

In other words, the inventors have surprisingly discovered that a pore-forming compound does not necessarily need to be added to the mixture to be able to produce or manufacture a porous sintered inorganic substrate. Hence and advantageously, the mixture does not comprise a pore-forming compound.

Advantageously, a porous (sintered) inorganic substrate can be obtained by heating the inorganic substrate at a temperature between 750 °C and 1400 °C for a duration between 1 s and 200 s.

Advantageously, a sintered inorganic substrate having a porosity gradient can be obtained by heating the inorganic substrate according to the method represented in for example figures 3 and 5, i.e. by inducing a first electrical current 102a and a second electrical current 102b independently from one another.

A preferred example of a sintered inorganic substrate having a porosity gradient is a dense-porous bilayer inorganic substrate, i.e. an inorganic substrate having at one surface or side a porosity of at least 40 % (i.e. porous) and at the opposite surface or side a porosity of at most 40 % (i.e. dense). Advantageously, the thickness of the dense layer and the thickness of the porous layer can be varied by varying the heating and sintering conditions at both sides, in particular the heating rate, the temperature and/or the sintering duration.

Optionally, a pore-forming compound may be added to the mixture when an inorganic substrate having a high porosity is to be obtained. When a pore-forming compound is used, the mixture advantageously comprises between 20 vol.% and 90 vol.% of the pore-forming compound, preferably between 30 vol.% and 80 vol%, more preferably between 50 vol.% and 75 vol.%.

Non-limiting examples of the pore-forming compound include synthetic organic materials such as polymethyl methacrylate (PMMA), polyvinyl chloride, polystyrene, polyethylene oxide, polyvinyl butyral, PMMA-polyethylene glycol. Advantageously, such synthetic organic materials are in the shape of beads or spheres. Other non-limiting examples of the pore-forming compound include phenolic resins, polymeric gels, cellulose acetate, natural organics such as sucrose, dextrin, starch, water and , emulsion oils salts (e.g. NaCl, BaSO₄, SrSO₄, K₂SO₄), and metal ceramics (e.g. ZnO, SiO₂). A preferred example of the pore-forming compound is PMMA.

The sintering methods of the invention can be used to produce a solid state electrolyte comprising one or more of an alkali metal and/or an alkaline earth metal. Advantageously, the SSE comprises an alkali metal. Advantageously, the alkali metal comprises one or more of lithium, sodium or potassium. Advantageously, when the alkali metal comprises lithium, the lithium is present as a lithium garnet-type structure. Advantageously, the lithium garnet-type structure is lithium lanthanum zirconium oxide (LLZO). In other words, the SSE obtained by methods of the invention advantageously comprises LLZO.

The SSE can be a single layer SSE, wherein the single layer advantageously is a dense layer, i.e. a layer having a porosity of at most 40 %, or a porous layer, i.e. a layer having a porosity of 40 % or more, as measured by X-ray computed tomography.

Alternatively, the SSE can be a multilayer solid state electrolyte. A "multilayer SSE" in the light of the present invention comprises any SSE having at least two layers, such as three, four, five, or more layers. Advantageously, the multilayer solid state electrolyte comprises alternating dense layers and porous layers. For example, when the number of layers is two, the multilayer SSE comprises a dense layer adjacent to a porous layer. For example, when the number of layers is three, the multilayer SSE can comprise a sequence of a dense layer, a porous layer, and a dense layer, or a sequence of a porous layer, a dense layer, and a porous layer.

An advantage of such a multilayer solid state electrolyte is, besides a high ionic conductivity and a high voltage stability, that it is non-flammable. Hence, a safe SSE is thus provided. Such a multilayer SSE is further capable to reduce, and even inhibit or avoid, the formation of dendrites of the alkali metal or alkaline earth metal, in particular lithium. This highly reduces the risk for short-circuiting in the solid state battery (SSB) comprising such a SSE, and thus improves the safety of the SSB.

### Examples

### Example 1

A reference porous substrate and an inventive porous substrate were made, wherein the difference between both was the sintering method. First, a mixture was prepared by mixing 3 g Li_{6.25}Al_{0.25}La₃Zr₂O₁₂ (aluminium-doped LLZO, or AI-LLZO), 0.075 gLi₂CO₃ (2.5 wt%), 0.56 mL plasticizer, 0.59 g surfactant and 2.07 g poly(methyl methacrylate) (PMMA) as pore-forming compound and 5.9 mL solvent comprising 5 vol.% isopropanol, 87 vol.% ethanol and 8 vol.% 1-propanol with a spatula, followed by ball milling for 18 hours at 165 rpm. A binder solution was prepared by adding 3 g polyvinyl butyral to 8.89 mL isopropanol. 2.51 g of the binder solution was added to the mixture (a suspension), followed by further ball milling for 2 hours at 200 rpm.

The mixture was film-casted by tape-casting on a glass substrate. This was performed twice, to obtain two green structures (i.e. one for each sintering method). The obtained green structures were kept for 1 hour at ambient conditions to allow evaporation of the solvent, and were then removed from the glass substrate.

The green structures were then placed between two alumina plates. Debinding of the green structures was performed at 600 °C in air to completely remove the solvents (evaporation temperatures of at most 150 °C), the PMMA (at around 350 °C) and residual organic compounds, such as the binders and plasticizers (at approx. 600 °C).

A reference (sintered) LLZO substrate was produced by placing a first green structure between two graphite foils, sandwiched between two carbon plates. Sintering was performed in a nitrogen atmosphere at 1250 °C for 30 seconds.

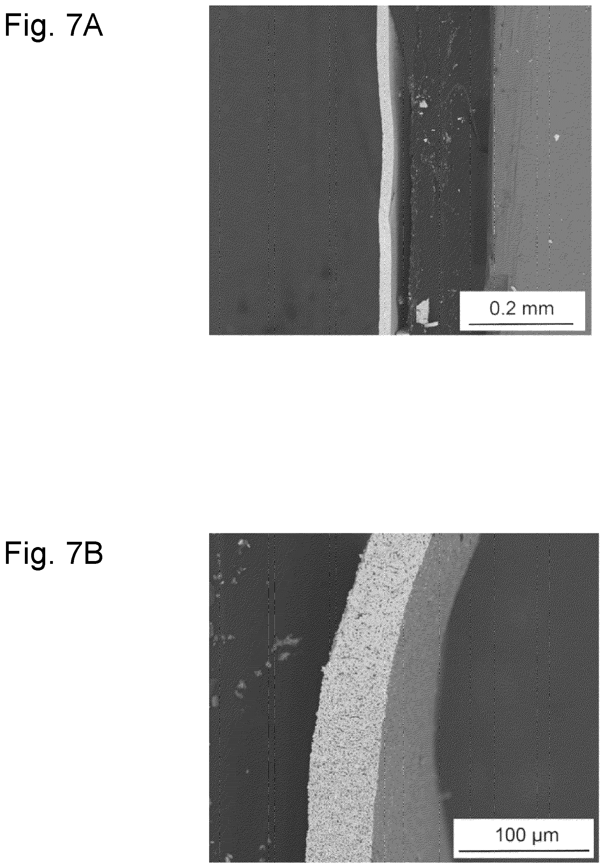

SEM-images of the cross-section (Figures 7A and 7B, at different magnifications) of the obtained reference sintered LLZO substrate clearly show that the hereby obtained reference sintered LLZO substrate was not flat, but highly curved. Also some cracks were noticed. The SEM-images were recorded using a Hitachi TM3030Plus Tabletop microscope with an acceleration voltage of 10 kV.

Similar results were also obtained by sintering in the same set-up, in a nitrogen atmosphere at temperatures between 1000 °C and 1250 °C for a duration between 30 seconds and 120 seconds.

An inventive (sintered) LLZO substrate was obtained by placing a second green structure between two carbon foils, which were then sandwiched between two boron nitride plates, followed by their insertion between two carbon felts. The proximal and the distal ends of both carbon felts as conductors were then clamped between two copper conductors. An AC/DC power source (Aim-TTi CPX400DP Dual 420 watt PowerFlex DC Power supply) was used to induce an electrical current to the copper electrodes and so to the carbon felts. The sintering was performed in an argon-filled glovebox. The sintering temperature was monitored by an IR camera (MAURER Pyrometer KTRD 4085-1). The electric current was applied to the carbon felts via the copper electrodes. Sintering was performed at 1200 °C for 90 seconds, and the heating rate was approx. 70 °C/s.

Afterwards, the sintered LLZO substrates were heat-treated in air at 600 °C for 30 minutes to remove graphite residue from the LLZO surface, followed by a heat-treatment at 900 °C for 10 minutes under an argon atmosphere to remove any contamination originating from the presence of Li₂CO₃ or LiOH on the LLZO surface.

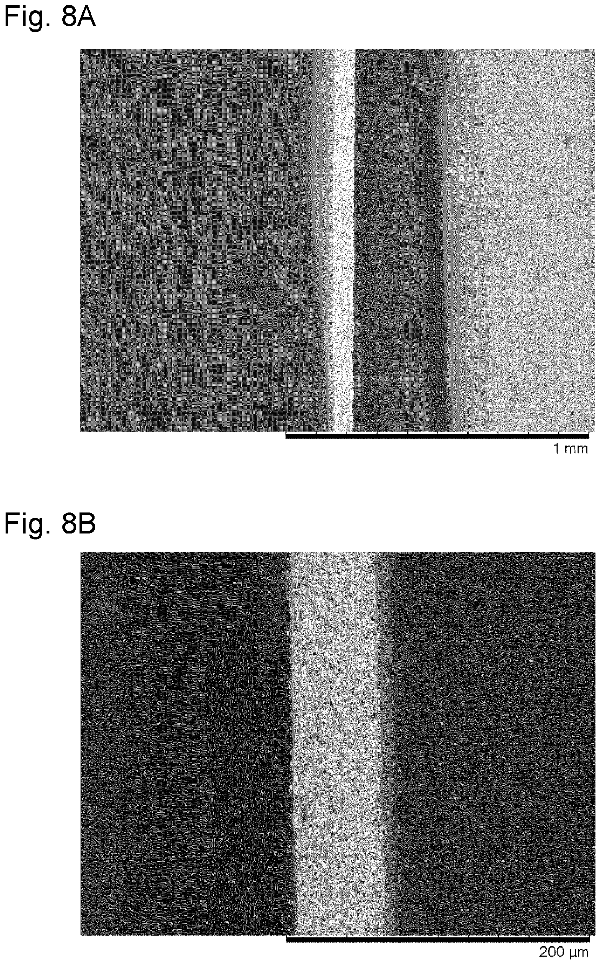

SEM-images of the cross-section (Figures 8A and 8B, at different magnifications) of the obtained inventive sintered LLZO substrate clearly show that the inventive sintered LLZO substrate was substantially flat. Similar results were also obtained by sintering in the same apparatus and set-up at temperatures between 1000 °C and 1250 °C for a duration between 30 seconds and 120 seconds.

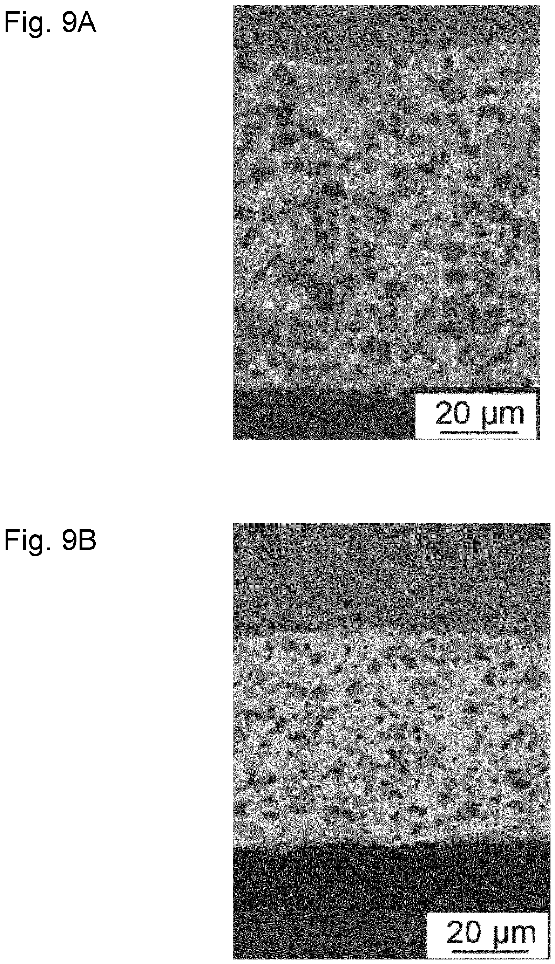

Figure 9A shows a SEM-image of the cross-section of the debinded LLZO substrate prior to sintering, which comprises clear pores. Figure 9B shows a SEM-image of the cross-section of the debinded LLZO substrate after sintering. Pores are clearly visible.

### Example 2

A bilayer dense-porous inorganic substrate was made. A first mixture was prepared by mixing 3 g Li_{6.25}Al_{0.25}La₃Zr₂O₁₂ (aluminium-doped LLZO, or AI-LLZO), 0.15 gLi₂CO₃ (2.5 wt%), 0.56 mL plasticizer, 0.59 g surfactant and 5.9 mL solvent comprising 5 vol.% isopropanol, 87 vol.% ethanol and 8 vol.% 1-propanol with a spatula, followed by ball milling for 18 hours at 165 rpm. A binder solution was prepared by adding 3 g polyvinyl butyral to 8.89 mL isopropanol. 2.51 g of the binder solution was added to the mixture (a suspension), followed by further ball milling for 2 hours at 200 rpm.

A second mixture was prepared by mixing 3 g Li_{6.25}Al_{0.25}La₃Zr₂O₁₂ (aluminium-doped LLZO, or AI-LLZO), 0.15 gLi₂CO₃ (2.5 wt%), 0.56 mL plasticizer, 0.59 g surfactant and 2.07 g poly(methyl methacrylate) (PMMA) as pore-forming compound and 5.9 mL solvent comprising 5 vol.% isopropanol, 87 vol.% ethanol and 8 vol.% 1-propanol with a spatula, followed by ball milling for 18 hours at 165 rpm. A binder solution was prepared by adding 3 g polyvinyl butyral to 8.89 mL isopropanol. 2.51 g of the binder solution was added to the mixture (a suspension), followed by further ball milling for 2 hours at 200 rpm.

The first mixture was film-casted by tape-casting on a glass substrate. After 60 seconds, the second mixture was tape-casted onto the first mixture (i.e. sequential tape-casting). The obtained green structure was kept for 1 hour at ambient conditions to allow evaporation of the solvents, and was then removed from the glass substrate.

The green structure was then placed between two alumina plates. Debinding of the green structure was performed at 600 °C in air to completely remove the solvents (evaporation temperatures of at most 150 °C), the PMMA (at around 350 °C) and residual organic compounds, such as the binders and plasticizers (at approx. 600 °C).

The debinded green structure was then placed between two carbon foils, which were placed between two boron nitride plates, followed by their insertion between two carbon felts. The carbon felts were then clamped between two copper electrodes. A direct current power source was used, and the sintering was performed in an argon-filled glovebox. The electric current was applied to the carbon felts via the copper electrodes, which resulted in an ultrafast heating of the carbon felts. Sintering was performed at 1200 °C for approx. 90 seconds, and the heating rate was approx. 60 °C/s.

Afterwards, the sintered LLZO substrates were heat-treated in air at 600 °C for 30 minutes to remove graphite residue from the LLZO surface, followed by a heat-treatment at 900 °C for 10 minutes under an argon atmosphere to remove any contamination originating from the presence of Li₂CO₃ or LiOH on the LLZO surface.

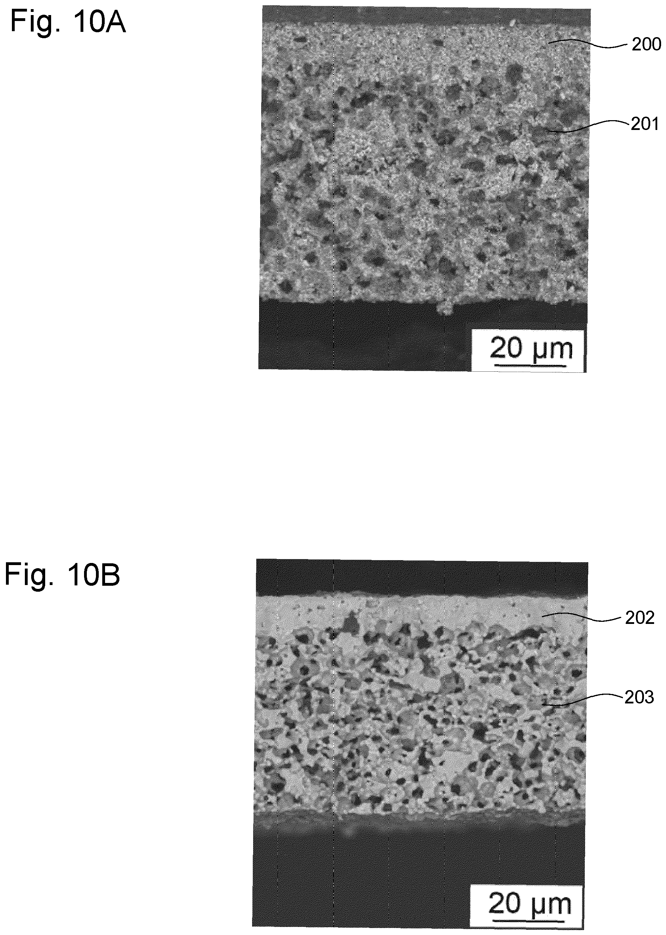

Figure 10A shows a SEM-image of the debinded bilayer LLZO substrate prior to sintering, comprising a dense layer 200 and a porous layer 201. Figure 10B shows the SEM-image of the debinded LLZO substrate after sintering. The sintered dense layer 202 and the sintered porous layer 203 are clearly visible.

The porous layer was analysed for its degree of porosity and pore size by means of X-ray computed tomography. The porosity varied between 40 % and 55 % within the porous layer, and the pores had a size between 1 µm and 9 µm. X-ray computed tomography measurements were conducted on EasyTom XL Ultra 230-160 micro/nano-CT scanner (RX Solutions, Chavanod France). The scanner operated at 90 kV and a current of 160 µA. The samples were scanned full 360° with a rotation step of 0.2° and frame average of 10. The nominal resolution was set at 850 nm voxel size. Image reconstruction was performed using the X-Act computed tomography software (RX Solutions, Chavanod, France).

### Example 3

To demonstrate the capability of the sintering methods of the present disclosure in producing dense inorganic structures and porous inorganic structures from the same starting materials, and without the need for adding a pore-forming compound, a mixture was prepared by mixing 3 g Li_{6.25}Al_{0.25}La₃Zr₂O₁₂ (aluminium-doped LLZO, or AI-LLZO), 0.075 gLi₂CO₃ (2.5 wt%), 0.408 mL plasticizer, 0.43 g surfactant and 4.3 mL solvent comprising 5 vol.% isopropanol, 87 vol.% ethanol and 8 vol.% 1-propanol with a spatula, followed by ball milling for 18 hours at 165 rpm. A binder solution was prepared by adding 3 g polyvinyl butyral to 8.89 mL isopropanol. 1.83 g of the binder solution was added to the mixture (a suspension), followed by further ball milling for 2 hours at 200 rpm.

The mixture was then tape-casted by a doctor-blade with 300 µm opening onto a glass substrate. The green substrate was left drying for 30 minutes under ambient air and was removed from the glass substrate.

The green structure was then placed between two alumina plates and heated to 200 °C in air for 2 hours to remove the solvent, followed by debinding in air at 600 °C for 2 hours.

The debinded green structure was then placed between two graphite foils, which were placed between two boron nitride plates, followed by their insertion between two carbon felts. The carbon felts were then clamped at their proximal end and at their distal end between two copper electrodes. A direct current power source was used, and the sintering was performed in an argon-filled glovebox. The electric current was applied to the carbon felts via the copper electrodes, which resulted in an ultrafast heating of the carbon felts. Sintering was performed at 1200 °C for various durations between 10 seconds and 90 seconds.

Afterwards, the sintered LLZO substrates were heat-treated in air at 600 °C for 30 minutes to remove graphite residue from the LLZO surface, followed by a heat-treatment at 900 °C for 10 minutes under an argon atmosphere to remove any contamination originating from the presence of Li₂CO₃ or LiOH on the LLZO surface.

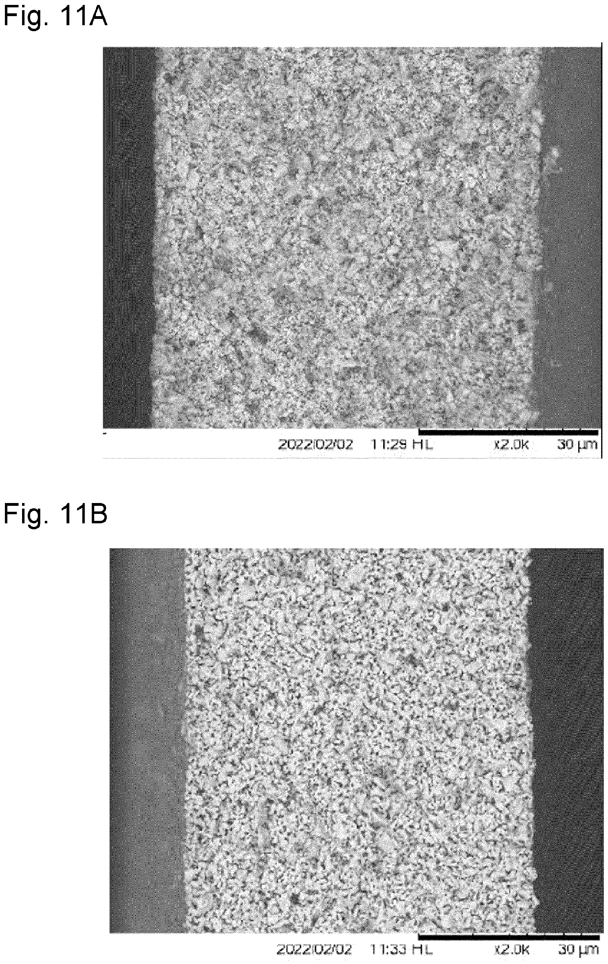

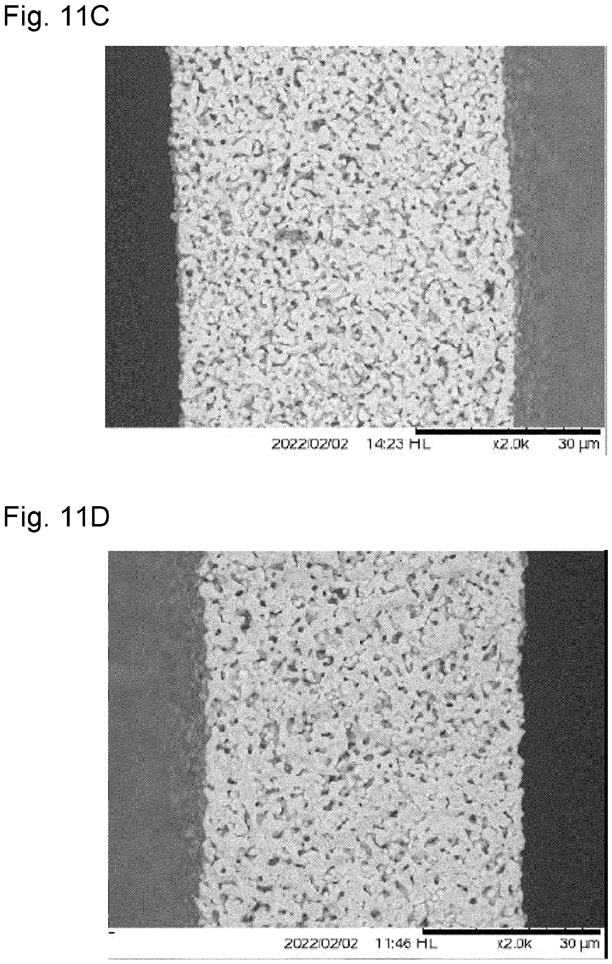

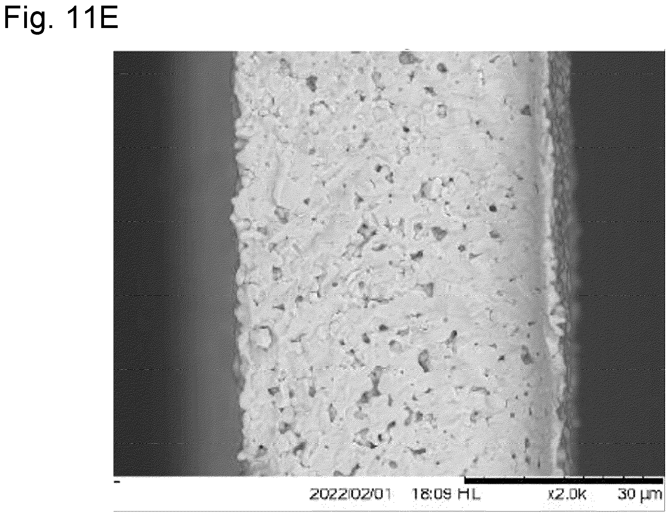

Figure 11A shows a SEM-image of the cross-section of the LLZO membrane obtained after sintering at 1200 °C for 10 seconds. The porosity was 44 %, as determined by means of X-ray computed tomography. In other words, a porous LLZO membrane was obtained. Figures 11B, 11C, 11D and 11E show a SEM-image of the cross-section of the LLZO membranes obtained after sintering at 1200 °C for 40 seconds, 50 seconds, 70 seconds and 90 seconds, respectively, having a porosity of 34 %, 21 %, 16 % or 8 %, respectively. In other words, dense LLZO membranes were obtained for these sintering durations.

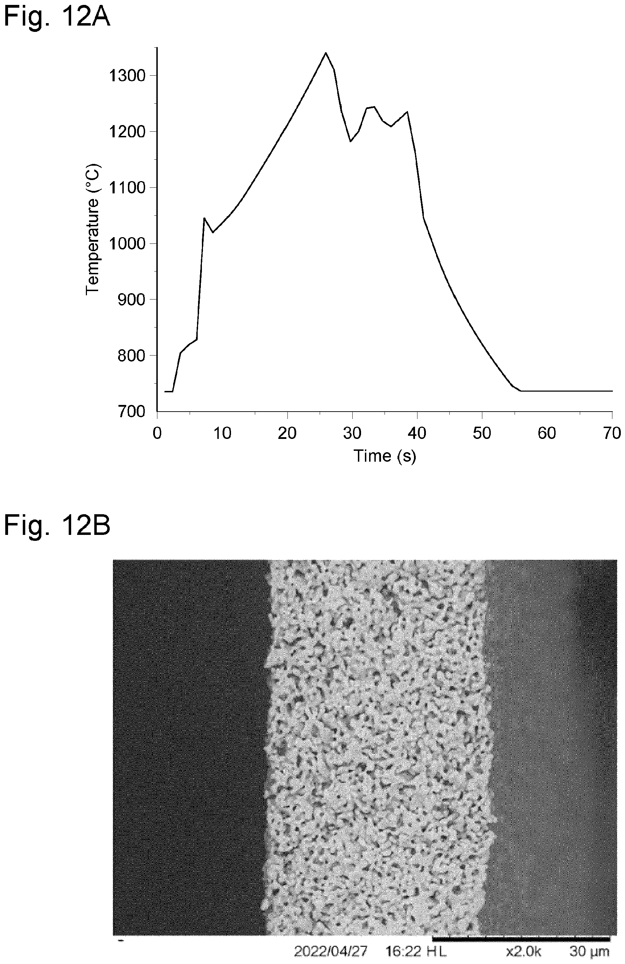

The same debinded green LLZO structure was sintered according to the profile shown in Figure 12A, indicating a sintering temperature of 1225 °C and a sintering duration of 27 seconds. Figure 12B shows a SEM-image of the cross-section of the LLZO membrane after sintering, and has a porosity of 27 %, i.e. a dense LLZO membrane.

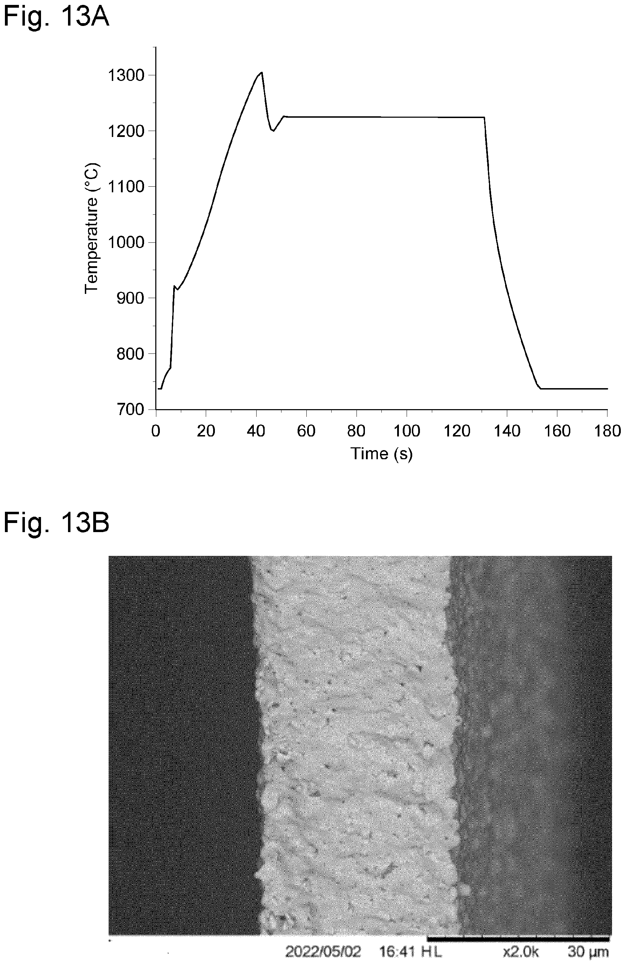

The same debinded green LLZO structure was also sintered according to the profile shown in Figure 13A, indicating a sintering temperature of 1225 °C and a sintering duration of 120 seconds. Figure 13B shows a SEM-image of the cross-section of the LLZO membrane after sintering, and has a porosity of 2 %, i.e. a fully dense LLZO membrane.

### Example 4

To determine the lithium-ion (Li-ion) conductivity of the LLZO membranes obtained by sintering methods of the invention, a fully dense LLZO-membrane was made according to Example 3. The LLZO substrate had a density which was 95 % to 98 % of the theoretical density of 5.1 g/cm³. The substrate was then coated with gold (Au) electrodes of 100 nm thick in total (each electrode being 50 nm thick), by means of thermal evaporation.

Electrochemical impedance spectroscopy (EIS) measurements were conducted on the dense LLZO substrate using a frequency range of 1 MHz to 0.1 Hz with a sinus amplitude of 10 mV. The ionic conductivity was calculated from a Re(Z) value of 20 Ω cm² (bulk and grain boundary resistance), the thickness of the LLZO membrane (38 µm) and the diameter of the symmetrical thermally evaporated 50 nm Au electrodes (5 mm). The ionic conductivity thus obtained was 1.9 × 10⁻⁴ S/cm.

### Example 5

To evaluate the electrochemical performance of a porous layer obtained according to the invention with respect to lithium plating/stripping, a symmetrical battery cell with a lithium metal anode and a lithium metal cathode, and a single porous layer were made. A porous layer as obtained in Example 1 was used. The symmetrical battery cell was made by thermal evaporation of 200 nm metallic lithium (using a Covap thermal evaporator) followed by cold isostatic pressing (using a PW 100 EH cold isostatic press) of the lithium foil onto the porous layer at ca. 71 MPa for 5 minutes on both sides of the porous LLZO layer. This allowed impregnation of the lithium up to approx. 15 µm into the porous layer. This corresponded to an areal capacity of approx. 1.5 mAh/cm².

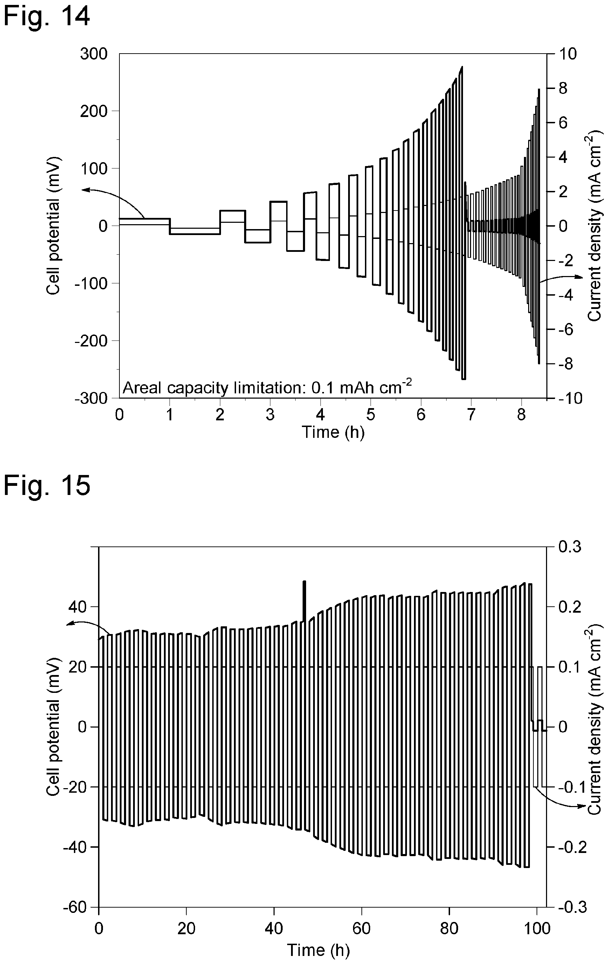

The achievable critical current density (CCD) of the symmetrical battery cell, i.e. the current density at which the propagation of Li dendrites/filaments starts, was determined by galvanostatic cycling experiments at different current densities between 0.1 mA/cm² and 8 mA/cm². The current density was increased from 0.1-1.5 mA/cm² with a step of 0.1 mA/cm², from 1.5-3 mA/cm² with a step of 0.5 mA/cm², and from 3-10 mA/cm² with a step of 1 mA/cm², transferring the same amount of Li for each half cycle (0.1 mAh/cm², i.e. the areal capacity limitation applied during the test). The tests were performed at room temperature without applying any stack pressure. Figure 14 shows the results, indicating that the symmetrical cells with a single porous layer showed a high critical current density of up to 1.7 mA/cm².

Galvanostatic cycling experiments were conducted at a constant current density of 0.1 mA/cm² with a areal capacity limit of 0.1 mAh/cm² per half-cycle. The results are shown in Figure 15. A high cycling stability of the cells for ca. 100 h and a relatively low voltage polarization of 30-45 mV during cycling was observed.

### Nomenclature

- 1.: inorganic substrate
- 2.: first thermally conductive substrate
- 3.: second thermally conductive substrate
- 4.: third thermally conductive substrate
- 5.: fourth thermally conductive substrate
- 6.: first conductor
- 7.: second conductor
- 8.: third conductor
- 9.: fourth conductor
- 10.: infrared (IR) light source
- 60.: proximal end of first conductor
- 61.: distal end of first conductor
- 70.: proximal end of second conductor
- 71.: distal end of second conductor
- 81.: (first portion of) third conductor
- 82.: (second portion) of third conductor
- 91.: (first portion of) fourth conductor
- 92.: (second portion of) fourth conductor
- 100.: schematical sintering arrangement
- 101.: space between first and second thermally conductive substrates
- 102.: means for inducing electrical current
- 102a.: means for inducing electrical current
- 102b.: means for inducing electrical current
- 110.: schematical sintering arrangement
- 120.: schematical sintering arrangement
- 130.: schematical sintering arrangement
- 140.: schematical sintering arrangement
- 150.: schematical sintering arrangement
- 200.: dense layer prior to sintering
- 201.: porous layer prior to sintering
- 202.: sintered dense layer
- 203.: sintered porous layer

## Claims

1. Method for producing a sintered inorganic substrate, comprising:
- providing an inorganic substrate (1) to be sintered,
- providing the inorganic substrate (1) between a first thermally conductive substrate (2) and a second thermally conductive substrate (3), wherein the first (2) and second (3) thermally conductive substrates comprise carbon,
- providing the first (2) and the second (3) thermally conductive substrate and the inorganic substrate (1) between a third thermally conductive substrate (4) and a fourth thermally conductive substrate (5),
- heating the third (4) and/or the fourth (5) thermally conductive substrate at a heating rate of at least 50 °C/s to a temperature between 750 °C and 1400 °C, preferably between 900 °C and 1250 °C, thereby heating the first (2) and/or the second (3) thermally conductive substrate, respectively, and
- sintering the inorganic substrate (1) by heating the inorganic substrate (1) at a temperature between 750 °C and 1400 °C, preferably between 900 °C and 1250 °C with the heated first (2) and/or second (3) thermally conductive substrate,
**characterized in that** the third (4) and the fourth (5) thermally conductive substrates comprise, independently from one another, one or more metal nitride and/or metal oxide.

2. Method for producing a sintered inorganic substrate according to claim 1, wherein the third (4) and the fourth (5) thermally conductive substrates comprise, independently from one another, one or more monocrystalline metal nitride and/or monocrystalline metal oxide.

3. Method for producing a sintered inorganic substrate according to any one of the preceding claims, wherein the metal nitride comprises boron nitride and/or aluminium nitride.

4. Method for producing a sintered inorganic substrate according to any one of the preceding claims, wherein the metal oxide comprises alumina and/or sapphire.

5. Method for producing a sintered inorganic substrate according to any one of the preceding claims, wherein the third (4) and the fourth (5) thermally conductive substrates are heated, and wherein the third (4) and the fourth (5) thermally conductive substrates are heated independently of each other.

6. Method for producing a sintered inorganic substrate according to any one of the preceding claims, further comprising providing the third (4) and the fourth (5) thermally conductive substrate, the first (2) and the second (3) thermally conductive substrate and the inorganic substrate (1) between a first conductor (6) and/or a second conductor (7), preferably wherein the first (6) and the second (7) conductor comprises carbon.

7. Method for producing a sintered inorganic substrate according to claim 6, wherein heating the third (4) and/or the fourth (5) thermally conductive substrate comprises inducing an electrical current (102, 102a, 102b) to the first (6) and/or the second conductor (7), thereby heating the third (4) and/or the fourth (5) thermally conductive substrate.

8. Method for producing a sintered inorganic substrate according to claim 7, wherein the electrical current is induced (102, 102a, 102b) to the first (6) and/or the second (7) conductor by
- providing a third conductor (8, 81, 82) at a proximal end (60) of the first conductor (6) and/or at a proximal end (70) of the second conductor (7), preferably wherein the third conductor (8, 81, 82) comprises one or more of copper and tungsten,
- providing a fourth conductor (9, 91, 92) at a distal end (61) of the first conductor (6) and/or at a distal end (71) of the second conductor (7), preferably wherein the fourth conductor (9, 91, 92) comprises one or more of copper and tungsten, and
- inducing an electrical current (102, 102a, 102b) to the third (8, 81, 82) and the fourth (9, 91, 92) conductor, thereby inducing the electrical current (102, 102a, 102b) to the first (6) and/or the second (7) conductor.

9. Method for producing a sintered inorganic substrate according to any one of claims 1 to 6, wherein the third (4) and/or the fourth (5) thermally conductive substrate is heated by means of infrared (IR) radiation.

10. Method for producing a sintered inorganic substrate according to claim 9 in view of claim 6, wherein heating the third (4) and/or the fourth (5) thermally conductive substrate by means of IR radiation comprises heating the first (6) and/or the second (7) conductor by means of IR radiation, thereby heating the third (4) and/or the fourth (5) thermally conductive substrate, respectively.

11. Method for producing a sintered inorganic substrate according to any one of the preceding claims, wherein the heating and the sintering are carried out in the presence of an inert gas.

12. Method for producing a sintered inorganic substrate according to any one of the preceding claims, wherein providing the inorganic substrate (1) to be sintered comprises:
- adding a compound comprising one or more of an alkali metal and/or an alkaline earth metal and a binder to a solvent, thereby obtaining a mixture;
- film-casting the mixture, thereby obtaining a green structure, and
- debinding the green structure, thereby removing at least partially the binder and the solvent, thereby obtaining the inorganic substrate (1).

13. Method for obtaining a sintered inorganic substrate having a porosity of at least 40% as measured by X-ray computed tomography, comprising providing an inorganic substrate (1) according to claim 12, and further wherein the inorganic substrate (1) is heated at a temperature between 750 °C and 1400 °C for a duration between 1 s and 200 s.

14. Method for obtaining a sintered inorganic substrate having a first porosity at a first surface and a second porosity different from the first porosity at a second surface opposite to the first surface, comprising providing an inorganic substrate (1) according to claim 12, and further wherein the third (4) and the fourth (5) thermally conductive substrates are heated to a different temperature and/or for a different duration, thereby heating the first surface and the second surface opposite to the first surface to a different temperature and/or for a different duration, wherein the temperature is between 750 °C and 1400 °C and the duration between 1 s and 200 s.

15. Use of the method according to any one of claims 1 to 14, for producing an inorganic solid state electrolyte.
